# EUROPÄISCHE PATENTSCHRIFT

(11) **EP 0 815 159 B1**
(45) Veröffentlichungstag und Bekanntmachung des Hinweises auf die Patenterteilung: **04.06.2003**
(21) Anmeldenummer: 96905861.9
(22) Anmeldetag: 05.03.1996
(51) Int. Cl.: C08G 65/48, H01M 6/18, H01M 10/40

(54) **VERFAHREN ZUR HERSTELLUNG VON POLYMERELEKTROLYTEN**
PROCESS FOR THE PRODUCTION OF POLYMER ELEKTROLYTES
PROCEDE DE PRODUCTION DES ELECTROLYTES POLYMERES

(30) Priorität: 20.03.1995 DE 19510027; 07.12.1995 DE 19545643
(43) Veröffentlichungstag der Anmeldung: 07.01.1998
(73) Patentinhaber: Celanese Ventures GmbH, 65926 Frankfurt am Main (DE)
(72) Erfinder: CLAUSS, Joachim, D-65929 Frankfurt (DE); DECKERS, Gregor, D-65929 Frankfurt (DE); SCHNELLER, Arnold, D-64409 Messel (DE); WITTELER, Helmut, D-65929 Frankfurt (DE)
(86) Internationale Anmeldenummer: EP9600925
(87) Internationale Veröffentlichungsnummer: WO96029359

(56) Entgegenhaltungen:
- EP-A- 0 337 626
- EP-A- 0 574 791
- EP-A- 0 575 807
- EP-A- 0 604 881
- US-A- 5 089 192
- INT. J. HYDROGEN ENERGY , Bd. 18, Nr. 08, 1993, G.B., Seiten 641-646, XP002007198 LINKOUS C.A.: "Development of solid polymer electrolytes"
- JOURNAL OF POLYMER SCIENCE , Bd. 23, 1985, Seiten 2205-2223, XP002008124 LITTER M.I. ET AL: "Polyaromatic ether-ketones and polyaromatic ether-ketone sulfonamides "
- J.Polym.Science Polym.Chem.Ed., Band 22, 1984, Seiten 295-301, J.Lee und C.S.Marvel

## Beschreibung

Die Erfindung betrifft ein Verfahren zur Herstellung von sulfonierten aromatischen Polyetherketon.

Sulfonierte Polyetherketone stellen Kationen-lonenaustauscher dar. Sie sind nützlich als Membranmaterialien, z.B. zur Ultrafiltration, zur Entsalzung und zur Entfernung von Mikroorganismen, da sie in vielen Fällen auch in Gegenwart von Wasser mechanisch beständig sind. Sulfonierte Polyetherketone sind protonen- und kationenleitende Materialien, die nützlich sind zur Elektrodialyse oder als Bestandteil von elektrochemischen Zellen.
Ausgangsmaterial ist das aromatische Polyetherketon wie in Formel (I) angegeben. 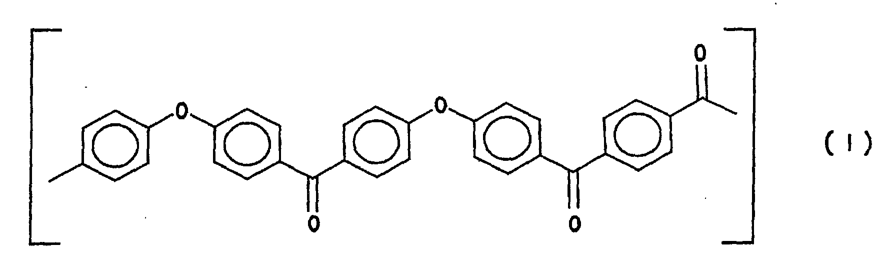 Das Polymere ist unter der Bezeichnung Ultrapek im Handel verfügbar.
Polyetherketone sind leicht zugänglich. Sie lassen sich prinzipiell durch eine elektrophile Polykondensation nach Friedel-Crafts aufbauen, wobei ein entsprechendes aromatisches Bissäuredihalogenid mit einem aromatischen Ether umgesetzt wird. Diese Möglichkeit ist z.B. in US-3 065 205, GB-971 227, US-3 441 538, GB-1 387 303, WO 84-03 891 und in dem Aufsatz von lwakura, Y., Uno, K. und Tahiguchi, T.J., Polym. Sci., Pat. A-1, 6, 3345 (1968), dargestellt. Daneben kann man die Etherketone durch nucleophile aromatische Substitution gewinnen. Hierzu wird ein entsprechendes aromatisches Bisdiol mit einem aromatischen Bishalogenketon umgesetzt, wie es z.B. in:R.A., Clendinning, A.G. Farnham, W.F. Hall, R.N. Johnson and C.N. Merriam, J. Polym. Sci. A1, 5, 2375, (1967), GB-1 177 183, GB-1 141 421, EP-0 001 879, US 4 108 837, US 4 175 175, T.E. Attwood, A.B. Newton, J.B. Rose, Br. Polym. Journ., 4, 391, (1972); T.E. Attwood, P.C. Dawson, J.L. Freemann, L.R.J. Hoy, J.B. Rose, P.A. Staniland, Polymer, 22, 1096, (1981) beschrieben wird.

Die Herstellung von sulfonierten Polyetherketonen aus einigen dieser Polyetherketone wird beschrieben in EP-A- 008 895, EP-A- 041 780 und EP-A-575 807.

Gemäß EP-A- 008 895 wird das zu sulfonierende Polymer bei Raumtemperatur in Schwefelsäure von 98 Gew.-% suspendiert. Der Löseprozeß und die Sulfonierung laufen gleichzeitig ab, wobei allmählich eine sehr viskose Lösung erhalten wird. Diese Lösung wird entweder sich selbst überlassen oder bei gleicher Temperatur mit Schwefelsäure gleicher Konzentration verdünnt. Die Reaktion verläuft sehr langsam. Erst nach 10 Wochen waren ca. 90 % der sulfonierbaren Phenylen-Einheiten sulfoniert. In den eingesetzten Etherketonen betrug das Zahlenverhältnis von Etherbrücken zu CO-Brücken etwa 2:1. Nach Angaben der Autoren werden unter diesen Bedingungen nur O-Phenylen-O-Einheiten sulfoniert.

Nach dem Verfahren gemäß EP-A-041780 werden bei erhöhter Temperatur aromatische Polyetherketone, die Copolymere darstellen, sulfoniert. Nur ein Teil der Monomereinheiten (A) ist der Sulfonierung zugänglich, während Monomereinheiten (B) nicht sulfoniert werden. Durch das Verhältnis A/B läßt sich so der Sulfonierungsgrad steuern. Jedoch bleiben auch hier die

Reaktionsbedingungen während des Löseprozesses und danach unverändert. Entsprechende Homopolymere (A) würden unter den angegebenen Bedingungen zu hoch sulfoniert sein und damit zu wasserlöslichen Verbindungen führen. Da hier die Sulfonierung bereits während des Auflöseprozesses des Polymeren stattfindet, ist es schwierig, den Sulfonierungsgrad zu kontrollieren und niedrig sulfonierte Produkte zu erhalten. Nach Angaben der Autoren werden unter diesen Bedingungen nur O-Phenylen-O-Einheiten sulfoniert.

Bei dem in EP-A- 575 807 offenbarten Verfahren wird das zu sulfonierende Polymer bei Raumtemperatur in Schwefelsäure von 94 bis 97 Gew.-% suspendiert. Der Löseprozeß und eine teilweise Sulfonierung des Polymers laufen gleichzeitig ab, wobei allmählich eine viskose Lösung erhalten wird. Die Lösung wird mit einem sulfonierenden Agens versetzt bis die Schwefelsäurekonzentration 98 bis 99,9 Gew.-% beträgt. Die Lösung verbleibt bis der gewünschte Sulfonierungsgrad erreicht ist und wird dann aufgearbeitet. Unter diesen Bedingungen werden nur O-Phenylen-O-Einheiten sulfoniert, während O-Phenylen-CO-Einheiten nicht angegriffen werden. Dies wird auch von Daoust et al. (Polymer, vol. 35(25), 5491-5497 (1994)) bestätigt, wobei der Sulfonierungsprozeß beschränkt ist auf eine Sulfonsäuregruppe pro Wiederholungseinheit und auf eine der vier äquivalenten Positionen des von zwei Ethereinheiten umgebenen Phenylenrings. Die anderen beiden Phenylenringe werden nach Daoust von der benachbarten Ketoneinheit so stark desaktiviert, daß hier keine Sulfonierung stattfindet.

Bei der Sulfonierung von Polyetherketonen unter Verwendung von Chlorsulfonsäure oder einem SO₃/Triethylphosphat-Komplex wird ein hoher Grad an Vernetzung sowie Zersetzung der Polymerhauptkette beobachtet (Marvel et al.,Journal of Polymer Science, Polymer Chem. Edition, vol. 23, 2205-2223, (1985) und Bishop et al., Macromolecules, vol. 18, 86-93 (1985)).

Bei den im Stand der Technik bekannten Verfahren werden von den eingesetzten Polyetherketonen immer nur O-Phenylen-O-Einheiten sulfoniert, während O-Phenylen-CO-Einheiten und CO-Phenylen-CO-Einheiten nicht oder nur zu einem verschwindend geringen Anteil sulfoniert werden oder bei Anwendung drastischerer Bedingungen eine Zerstörung der Polymerhauptkette erfolgt.

Polymere, die keine O-Phenylen-O-Einheiten aufweisen, beispielsweise solche der Formel (I), lassen sich nicht oder nicht in signifikantem Umfang sulfonieren. Die bei Anwendung härterer Reaktionsbedingungen erhaltenen Produkte sind in den herkömmlichen Lösemitteln unlöslich und können daher über Lösung nicht oder nur sehr schwer weiterverarbeitet werden.

Nach dem im Stand der Technik bekannten Verfahren war es daher nicht zu erwarten, daß Polymere, die keine O-Phenylen-O-Einheiten sondern nur O-Phenylen-CO-Einheiten und CO-Phenylen-CO-Einheiten besitzten, sulfoniert werden können. Ebenfalls war nach dem Stand der Technik nicht zu erwarten, daß die erhaltenen sulfonierten Produkte sich in herkömmlichen Lösemitteln lösen.

Die Aufgabe der vorliegenden Erfindung ist es somit, ein schonendes und kontrollierbares Verfahren zur Sulfonierung von Polyetherketonen bereitzustellen, mit dem sich auch O-Phenylen-CO-Einheiten sulfonieren lassen.

Überraschenderweise wurde nun gefunden, daß es entgegen der in Literatur dominierenden Meinung möglich ist, Polymere gut und kontrollierbar auch an O-Phenylen-CO-Einheiten zu sulfonieren, wobei die erhaltenen Produkte ab einem gewissen Sulfonierungsgrad sogar löslich sind.

Die vorliegende Erfindung betrifft daher ein Verfahren zur Herstellung eines sulfonierten aromatischen Polyetherketon der allgemeinen Formel (II)

[Ar-O-Ar'-CO-Ar'-O-Ar-CO-Ar"-CO-] (II)

gemäß Anspruch 1.

Ebenso betrifft die vorliegende Erfindung ein Verfahren zur Herstellung dieser sulfonierten Polyetherketone, Polymerelektrolytlösungen enthaltend Polymere der Formel (II) sowie die Verwendung derartiger Polymerelektrolytlösungen.

Mit Hilfe des erfindungsgemäßen Verfahrens können aromatische Polyetherketone, insbesondere auch solche, die keine O-Phenylen-O-Einheiten besitzen, auch an den O-Phenylen-CO-Einheiten sulfoniert werden.

Das Verfahren ist dadurch gekennzeichnet, daß man ein entsprechendes unsulfoniertes aromatisches Polyetherketon der Formel (II) in Schwefelsäure von 94 bis 98 Gew.-% , insbesondere 94 bis 97 Gew.-%, löst, man die erhaltenen Lösung mit einem sulfonierenden Agens versetzt, bis die Schwefelsäurekonzentration 98 bis 100 Gew.-% oder bis die Oleumkonzentration 0.01 bis 15 Gew.-% SO₃ beträgt und man den Reaktionsansatz aufarbeitet, sobald der gewünschte Sulfonierungsgrad erreicht ist.

Vorzugsweise wird das aromatische Polyetherketon in Schwefelsäure unter schonenden Bedingungen gelöst, d.h. unter Bedingungen, bei denen eine Sulfonierung weitgehend unterdrückt wird, bzw. es noch nicht zu einer Sulfonierung kommt. Vorzugsweise beträgt die Konzentration der zum Auflösen verwendeten Schwefelsäure 94 bis 97 Gew.-%. Die Lösetemperatur wird so niedrig wie möglich gewählt, um ein Einsetzen der Sulfonierungsreaktion in diesem Stadium weitgehend zu vermeiden. Im allgemeinen liegt die Lösetemperatur zwischen 10 und 80 °C, insbesondere zwischen 20 und 70 °C, vorzugsweise zwischen 30 und 60 °C.

Für das Polyetherketon der Formel (1) wird nach eigenen Untersuchungen nach dem Lösevorgang bei maximal 80°C und nach 24 h bei Raumtemperatur in Schwefelsäure von 95 bis 97 Gew.-% ein Sulfonierungsgrad von weniger als 12 mol-% bezogen auf eine Wiederholeinheit beobachtet. Die Sulfonierungstemperatur liegt hier vorzugsweise im Bereich von 50 bis 100°C.

Bevorzugt sind Lösebedingungen, die zu einem Sulfonierungsgrad von maximal 35 % bezogen auf eine Wiederholeinheit führen. Während des Lösevorgangs ist eine Sulfonierung der Hauptkette weitgehend unterdrückt. Eigene Untersuchungen haben gezeigt, daß während des Lösevorgangs kein Abbau eintritt.

Als sulfonierendes Agens, das zur Erhöhung der Schwefelsäure-Konzentration und zur Sulfonierung dient, werden vorzugsweise rauchende Schwefelsäure, Oleum, Chlorsulfonsäure und Schwefeltrioxid eingesetzt.

Nach dem Lösevorgang wird die Konzentration der Schwefelsäure, z.B. durch Zugabe von Oleum, erhöht bis die Schwefelsäurekonzentration 98 bis 100 Gew.-% oder bis die Oleumkonzentration 0.01 bis 15 Gew.-% SO₃ beträgt, insbesondere bis die Schwefelsäurekonzentration 99 bis 100 Gew.-% oder bis die Oleumkonzentration 0.01 bis 5 Gew.-% SO₃ beträgt, vorzugsweise bis die Oleumkonzentration 0.01 bis 1 Gew.-% SO₃ beträgt.

Die Reaktionstemperatur bei der eigentlichen Sulfonierung kann höher oder auch niedriger liegen als beim Löseprozeß. Im allgemeinen sulfoniert man bei Temperaturen im Bereich von 10 und 100 °C, insbesondere 30 und 90 °C, vorzugsweise im Bereich von 50 und 70 °C. Sowohl eine Temperaturerhöhung als auch eine Verlängerung der Reaktionszeit bewirken eine Erhöhung des Sulfonierungsgrads des Polymers. Typische Reaktionszeiten liegen im Bereich von 45 Minuten und 24 Stunden, insbesondere 1 und 8 Stunden, vorzugsweise im Bereich von 1 und 4 Stunden. Untersuchungen haben gezeigt, daß während der Sulfonierungsreaktion nur in sehr geringem Maße ein Abbau der Polymerhauptkette eintritt.

Sobald der gewünschte Sulfonierungsgrad erreicht ist, wird die Reaktion abgebrochen und das Polymer z.B. im wäßrigen Milieu ausgefällt, isoliert und getrocknet. Das beschriebene Verfahren ergibt Sulfonierungsprodukte, die sich ab einem bestimmten Sulfonierungsgrad in herkömmlichen Lösemitteln, wie z.B. NMP oder DMSO, lösen lassen.
Die Sulfonsäuregruppen (SO₃H) können nach der Sulfonierung mit den bekannten Verfahren in ihre Salzform (SO₃M) überführt werden.

Der Vorteil der sulfonierten O-Phenylen-CO-Einheiten im Vergleich zu sulfonierten O-Phenylen-O-Einheiten in herkömmlichen Polymeren liegt unter anderem in der besseren hydrolytischen Stabilität der SO₃M-Gruppen. In wäßriger Umgebung und bei erhöhten Temperaturen kann Desulfonierung der sulfonierten Polyetherketone auftreten. Es ist bekannt, daß das Maß der hydrolytischen Desulfonierung von dem Elektronenreichtum der aromatischen Ringe abhängt. Im allgemeinen gilt, daß je einfacher sich eine aromatische Einheit sulfonieren läßt, desto einfacher läßt sie sich auch desulfonieren.

Beim Einsatz von sulfonierten Polymeren im wäßrigen Medium ist es unabdingbar, daß die Eigenschaften des sulfonierten Polymers konstant bleiben. Bei solchen Anwendungen ist es daher vorteilhaft ein sulfoniertes Polyetherketon zu verwenden, das Desulfonierung nicht oder nur zu einem geringem Umfang zuläßt. Ein Polymer, dessen Sulfonsäuregruppen zu einem möglichst hohem Grade an O-Phenylen-CO-Einheiten lokalisiert sind, ist demnach in solchen Fällen insbesondere geeignet.

Das beschriebene Verfahren ergibt Sulfonierungsprodukte, die sich ab einem bestimmten Sulfonierungsgrad in herkömmlichen Lösemitteln, wie z.B. N-Methylpyrrolidon (NMP) oder Dimethylsulfoxid (DMSO), lösen lassen. Die auf diese Weise hergestellten Polymerelektrolytlösungen enthalten in einer bevorzugten Ausführungsform mindestens 1 Gew.% Polyetherketone der Formel (II) und als Hauptbestandteil aprotische dipolare Lösemittel, wie z.B. NMP oder DMSO. Je nach weiterem Verwendungszweck der Polymerelektrolytlösung kann diese gegebenenfalls ein weiteres unsulfoniertes Polymer oder auch geringe Anteile von Hilfsstoffen enthalten.

Die mittels des erfindungsgemäßen Verfahren hergestellten Polymerelektrolytlösungen eignen sich insbesondere zur Herstellung von asymmetrischen Membranen, zum Beispiel für die Nano-, Ultra- oder Mikrofiltration sowie zur Herstellung von dichten Filmen mit einer Dicke im Bereich von 5 µm bis 1mm.

Eine besonders wichtige Rolle kommt den mittels des erfindungsgemäßen Verfahren hergestellten Polymerelektrolytlösungen bei der Herstellung eines besonders intensiven Kontaktes zwischen zwei Polymerelektrolytoberflächen zu. Eine poröse oder rauhe Oberfläche kann so z.B. nach Kontaktieren der Lösung mit einem Fällungsmittel erzielt werden.

### Beispiele:

In einer Vierhals-Rührapparatur mit Tropftrichter und Ölbad wurde 96%ige konzentrierte Schwefelsäure vorgelegt und Polyetherketon der Formel (I) gelöst. Danach wurde Oleum (Gehalt 20 % SO₃) zutitriert, bis ein sulfonierendes Gemisch erreicht wurde mit Oleumkonzentrationen von 0,1 bis 0,7 Gew.-% SO₃.
Anschließend wurde die Mischung auf Reaktionstemperatur gebracht, um eine kontrollierte Sulfonierung zu gewährleisten. Nach Erreichen des gewünschten Sulfonierungsgrades wurde die Reaktion gestoppt und das Produkt isoliert. Die Charakterisierung des Produktes erfolgt mittels Viskosimetrie, ¹³C-NMR-Spektroskopie und Elementaranalyse.

Die Versuche in Tabelle 1 wurden mit einem Homopolymeren der allgemeinen Formel (I) durchgeführt. In der Tabelle werden folgende Abkürzungen benutzt:
- NR: Versuchsnummer
- LT: Lösetemperatur in °C
- PK: Polymerkonzentration in Gew.-%
- LZ: Lösezeit in min
- RK: Reaktionskonzentration von Oleum in Gew.-% SO₃
- RT: Reaktionstemperatur in °C (Sulfonierungstemperatur)
- RZ: Reaktionszeit in min
- SG: Sulfonierungsgrad in mol-% bezogen auf eine Wiederholungseinheit
- lV: inhärente Viskosität in dl/g gemessen in konz. H₂SO₄ bei 25 °C.

**Tabelle 1:**

| NR | PK | LT | LZ | RK | RT | RZ | SG | IV |
|---|---|---|---|---|---|---|---|---|
| 1 | 6,7 | 50 | 60 | 0,4 | 60 | 0 | 5,8 | 0,93 |
| 2 | 6,7 | 50 | 60 | 0,4 | 60 | 30 | 22,0 | 0,90 |
| 3 | 6,7 | 50 | 60 | 0,4 | 60 | 60 | 35,3 | 0,87 |
| 4 | 6,7 | 50 | 60 | 0,4 | 60 | 90 | 44,1 | 0,85 |
| 5 | 6,7 | 50 | 60 | 0,4 | 60 | 120 | 51,4 | 0,84 |
| 6 | 6,7 | 50 | 60 | 0,4 | 60 | 150 | 59,6 | 0,82 |
| 7 | 6,7 | 50 | 60 | 0,7 | 50 | 0 | 9,0 | 1,01 |
| 8 | 6,7 | 50 | 60 | 0,7 | 50 | 30 | 18,5 | 0,96 |
| 9 | 6,7 | 50 | 60 | 0,7 | 50 | 60 | 27,4 | 0,93 |
| 10 | 6,7 | 50 | 60 | 0,7 | 50 | 120 | 44,6 | 0,91 |
| 11 | 6,7 | 50 | 60 | 0,7 | 50 | 180 | 56,8 | 0,89 |
| 12 | 6,7 | 50 | 60 | 0,7 | 50 | 240 | 65,1 | 0,84 |
| 13 | 6,7 | 50 | 60 | 0,7 | 50 | 360 | 81,0 | 0,81 |
| 14 | 6,7 | 50 | 60 | 0,7 | 50 | 460 | 96,0 | 0,76 |
| 15 | 6,7 | 50 | 60 | 0,7 | 50 | 525 | 104,0 | 0,74 |
| 16 | 6,7 | 50 | 60 | 0,7 | 70 | 0 | 6,6 | 0,94 |
| 17 | 6,7 | 50 | 60 | 0,7 | 70 | 60 | 99,9 | 0,79 |
| 18 | 6,7 | 50 | 60 | 0,7 | 70 | 120 | 152,2 | 0,71 |
| 19 | 6,7 | 50 | 60 | 0,7 | 70 | 180 | 188,2 | 0,62 |
| 20 | 6,7 | 50 | 60 | 0,7 | 70 | 240 | 213,8 | 0,58 |
| 21 | 6,7 | 50 | 60 | 0,7 | 70 | 320 | 229,8 | 0,55 |
| 22 | 6,7 | 50 | 60 | 0,1 | 50 | 0 | 3,0 | 1,02 |
| 23 | 6,7 | 50 | 60 | 0,1 | 50 | 60 | 5,3 | 0,97 |
| 24 | 6,7 | 50 | 60 | 0,1 | 50 | 120 | 9,7 | 0,94 |
| 25 | 6,7 | 50 | 60 | 0,1 | 50 | 180 | 14,1 | 0,91 |
| 26 | 6,7 | 50 | 60 | 0,1 | 50 | 240 | 17,8 | 0,89 |
| 27 | 6,7 | 50 | 60 | 0,1 | 50 | 300 | 22,3 | 0,88 |
| 28 | 6,7 | 50 | 60 | 0,1 | 50 | 435 | 28,2 | 0,84 |
| 29 | 6,7 | 50 | 60 | 0,1 | 70 | 0 | 6,3 | 0,91 |
| 30 | 6,7 | 50 | 60 | 0,1 | 70 | 30 | 37,3 | 0,87 |
| 31 | 6,7 | 50 | 60 | 0,1 | 70 | 60 | 43,8 | 0,85 |
| 32 | 6,7 | 50 | 60 | 0,1 | 70 | 120 | 52,9 | 0,82 |
| 33 | 6,7 | 50 | 60 | 0,1 | 70 | 180 | 59,0 | 0,79 |
| 34 | 6,7 | 50 | 60 | 0,1 | 70 | 330 | 81,8 | 0,74 |
| 35 | 6,7 | 50 | 60 | 0,1 | 70 | 390 | 86,3 | 0,70 |

## Patentansprüche

1. Verfahren zur Herstellung eines sulfonierten aromatischen Polyetherketons der allgemeinen Formel (II)
[Ar-O-Ar'-CO-Ar'-O-Ar-CO-Ar"-CO-] (II)
bei dem 1 % bis 100 % der 0-Phenylen-CO-Einheiten mit einer SO₃M-Gruppe substituiert sind und sulfonierte sowie unsulfonierte O-Phenylen-CO-Einheiten in beliebiger Reihenfolge zueinander stehen und die Reste Ar, Ar' und Ar" unabhängig voneinander, gegebenenfalls substituierte, 1,2-, 1,3- oder 1,4-Phenylenringe darstellen und M, unter Berücksichtigung der ionischen Wertigkeiten, für eines oder mehrere Elemente ausgewählt aus der folgenden Gruppe: H, NR₄⁺, mit R = H, C₁-C₄-Alkyl-, oder ein Alkali- oder Erdalkalimetall oder ein Metall der 8. Nebengruppe, vorzugsweise für H, NR₄⁺, Li, Na, K, Ca, Mg, Fe und Pt, steht, durch Lösen des entsprechenden unsulfonierten Polyetherketons der Formel (II) in Schwefelsäure von 94 bis 97 Gew.-%, Versetzen der so erhaltenen Lösung bei einer geeigneten Temperatur mit einem sulfonierenden Agens, bis die Schwefelsäure-konzentration 98 bis 100 Gew.% oder bis die Oleumkonzentration 0,01 - 15 Gew.% SO₃ beträgt und Aufarbeitung des Reaktionsansatzes sobald der gewünschte Sulfonierungsgrad erreicht ist und gegebenenfalls Überführung der Sulfonsäuregruppen in ihre Salzform.

2. Verfahren nach Anspruch 1, **dadurch gekennzeichnet, daß** die Lösetemperatur im Bereich von 10 bis 80°C liegt.

3. Verfahren nach Anspruch 1, **dadurch gekennzeichnet, daß** die Sulfonierungstemperatur im Bereich von 10 bis 100°C liegt.

4. Verfahren nach Anspruch 1, **dadurch gekennzeichnet, daß** nach Zugabe des sulfonierenden Agens die Temperatur der Lösung mindestens 30°C beträgt.

5. Verfahren nach Anspruch 1, **dadurch gekennzeichnet, daß** als Sulfonierungsagens Schwefelsäure, rauchende Schwefelsäure, Oleum, Chlorsulfonsäure, Schwefeltrioxid oder Mischungen dieser Verbindungen verwendet werden.

6. Verfahren nach Anspruch 1, **dadurch gekennzeichnet, daß** man das in Schwefelsäure gelöste Polyetherketon mit Oleum versetzt, bis die Schwefelsäure-Konzentration 98 bis 100 Gew.-% oder die Oleumkonzentration 0,01 bis 15 Gew.-% SO₃ beträgt.

7. Verfahren nach Anspruch 1, **dadurch gekennzeichnet, daß** man ein entsprechend unsulfoniertes Polyetherketon der Formel (II) in Schwefelsäure von 95 bis 97 Gew.-% bei maximal 80°C löst und bei Temperaturen vo 50 bis 100°C sulfoniert.

## Claims

1. A process for the preparation of a sulfonated aromatic polyetherketone of the formula (II)
[Ar-O-Ar'-CO-Ar'-O-Ar-CO-Ar"-CO-] (II)
in which from 1% to 100% of the O-phenylene-CO units are substituted with an SO₃M group and sulfonated and unsulfonated O-phenylene-CO units can be in any desired sequence with respect to one another, the radicals Ar, Ar' and Ar" independently of one another are substituted or unsubstituted 1,2-, 1,3- or 1,4-phenylene rings, and M, taking into account the ionic valencies, comprises one or more elements selected from the following group: H, NR₄⁺, where R is H or C₁-C₄-alkyl, or an alkali metal or alkaline earth metal or a metal from subgroup 8, and is preferably H, NR₄⁺, Li, Na, K, Ca, Mg, Fe or Pt. by dissolving the corresponding unsulfonated polyetherketone of the formula (II) in from 94 to 97% strength by weight sulfuric acid, adding a sulfonating agent to the solution thus obtained, at an appropriate temperature, until the concentration of sulfuric acid is from 98 to 100% by weight or the concentration of oleum is from 0.01 to 15% by weight of SO₃, and working up the reaction mixture as soon as the desired degree of sulfonation has been reached, and, if desired, converting the sulfonic acid groups into their salt form.

2. The process as claimed in claim 1, wherein the dissolution temperature is in the range from 10 to 80°C.

3. The process as claimed in claim 1, wherein the sulfonation temperature is in the range from 10 to 100°C.

4. The process as claimed in claim 1, wherein following addition of the sulfonating agent the temperature of the solution is at least 30°C.

5. The process as claimed in claim 1, wherein the sulfonating agent used is sulfuric acid, fuming sulfuric acid, oleum, chlorosulfonic acid, sulfur trioxide or a mixture of these compounds.

6. The process as claimed in claim 1, wherein oleum is added to the polyetherketone, dissolved in sulfuric acid, until the concentration of sulfuric acid is from 98 to 100% by weight or the concentration of oleum is from 0.01 to 15% by weight of SO₃.

7. The process as claimed in claim 1, wherein the corresponding unsulfonated polyether ketone of the formula (II) is dissolved in from 95 to 97% strength by weight sulfuric acid at not more than 80°C and is sulfonated at temperatures of from 50 to 100°C.

## Revendications

1. Procédé de préparation d'une polyéthercétone sulfonée aromatique de formule générale (II)
[Ar-O-Ar'-CO-Ar'-O-Ar-CO-Ar"-CO-]. (II)
dans laquelle de 1% à 100% des unités O-phénylène-CO sont substituées par un groupe SO₃M et des unités O-phénylène-CO sulfonées ainsi que non sulfonées se trouvant les unes par rapport aux autres dans un ordre quelconque et les restes Ar, Ar' et Ar", les uns indépendamment des autres, éventuellement substitués, représentent un cycle 1,2-, 1,3-ou 1,4-phénylène et M signifie, en tenant compte des valences ioniques, un ou plusieurs éléments choisis dans le groupe constitué des groupes suivants H, NR₄⁺, avec R = H, un groupe alkyle en C₁-C₄, ou un métal alcalin ou un métal alcalino-terreux ou un métal du 8^{ème} sous-groupe, de préférence H, NR₄⁺, Li, Na, K, Ca, Mg, Fe et Pt, par dissolution de la polyéthercétone de formule (II) non sulfonée dans de l'acide sulfurique de 94 à 97% en poids, ajout d'un agent de sulfonation à la solution obtenue à une température appropriée jusqu'à ce que la concentration en acide sulfurique s'élève de 98 à 100% en poids ou jusqu'à ce que la concentration en oléum s'élève de 0,01 à 15% en poids de SO₃ et un traitement complémentaire de la charge réactionnelle dès que le degré de sulfonation voulu est atteint et éventuellement la transformation des groupes acides sulfoniques sous leur forme saline.

2. Procédé selon la revendication 1, **caractérisé en ce que** la température de dissolution est comprise dans le domaine de 10 à 80°C.

3. Procédé selon la revendication 1, **caractérisé en ce que** la température de sulfonation est comprise dans le domaine de 10 à 100°C.

4. Procédé selon la revendication 1, **caractérisé en ce que**, après l'ajout de l'agent de sulfonation, la température de la solution s'élève à au moins 30°C.

5. Procédé selon la revendication 1, **caractérisé en ce que** l'on utilise en tant qu'agent de sulfonation l'acide sulfurique, l'acide sulfurique fumant, l'oléum, l'acide chlorosulfonique, le trioxyde de soufre ou des mélanges de ces composés.

6. Procédé selon la revendication 1, **caractérisé en ce que** l'on ajoute de l'oléum à la polyéthercétone dissoute dans de l'acide sulfurique jusqu'à ce que la concentration en l'acide sulfurique s'élève de 98 à 100% en poids ou que la concentration en oléum s'élève de 0,01 à 15% en poids de SO₃.

7. Procédé selon la revendication 1, **caractérisé en ce que** l'on dissout une polyéthercétone de formule (II) non sulfonée dans de l'acide sulfurique de 95 à 97% en poids à une température maximale de 80°C et **en ce qu'**elle est sulfonée à des températures de 50 à 100°C.
